# EUROPÄISCHE PATENTSCHRIFT

(11) **EP 0 974 779 B1**
(45) Veröffentlichungstag und Bekanntmachung des Hinweises auf die Patenterteilung: **23.10.2002**
(21) Anmeldenummer: 99113075.8
(22) Anmeldetag: 06.07.1999
(51) Int. Cl.: F16L 11/118, F16L 11/127, F16L 9/12

(54) **Schlauch zum Fördern von fliessfähigen Stoffen**
Hose for conveying flowable substances
Tuyau souple pour convoyer des substances fluides

(30) Priorität: 24.07.1998 DE 19833493
(43) Veröffentlichungstag der Anmeldung: 26.01.2000
(73) Patentinhaber: WAGNER INTERNATIONAL AG, 9450 Altstätten (CH)
(72) Erfinder: Göbl, Otmar, 6844 Altach (AT)
(74) Vertreter: Liesegang, Roland, Dr.-Ing.

(56) Entgegenhaltungen:
- DE-A- 3 145 702
- DE-U- 7 534 723
- FR-A- 1 092 109
- US-A- 3 070 132
- US-A- 4 027 659
- US-A- 4 394 705

## Beschreibung

Die Erfindung betrifft einen Schlauch zum Fördern von fließfähigen Stoffen, insbesondere Beschichtungspulver, aus elektrisch nicht oder schlecht leitendem Material.

Beschichtungspulver werden gewöhnlich pneumatisch durch Kunststoffschläuche von einem Vorratsbehälter zu einer Sprühpistole gefördert. Die Reibung der Pulverartikel an den Schlauchwänden kann dabei starke elektrostatische Ladungen auf der Schlauchinnenseite erzeugen. Auf der Schlauchaußenseite bilden sich dann entsprechende Spiegelladungen, die gelegentlich so groß werden, daß elektrische Durchschläge durch die Schlauchwand hindurch und/oder Entladungen von der Schlauchaußenseite zu geerdeten Anlageteilen auftreten.

Um diese unerwünschten, teilweise gefährlichen Effekte zu vermeiden, hat man Schläuche aus elektrisch leitfähigem Material zur Förderung von Beschichtungspulvern eingesetzt. Solche Schläuche haben jedoch den Nachteil, daß sie leicht zu Pulveranbackungen oder - ansinterungen an der Schlauchinnenwand neigen und im Extremfall den Schlauch gänzlich verstopfen können.

Es ist ein Schlauch der beschriebenen Art mit einer elektrisch nicht oder schlecht leitenden Schlauchwand bekannt, in die ein geerdetes Wandteil aus elektrisch leitfähigem Material eingebaut ist, das sich radial über den Wandquerschnitt erstreckt (DE 31 45 702 A1, DE 12 76 207 U1).

Es ist auch ein Katheter oder Schlauch für medizinische Verwendung aus einem elektrisch nicht oder schlecht leitenden Kunststoff mit einem eingebauten elektrisch leitfähigen, für Röntgenstrahlen opaken Wandteil bekannt, der mit einer ausgewölbten Krone versehen sein kann, um den gewünschten Träger für ein Gemisch aus zwei unterschiedlichen Pigmenten zu schaffen (US-A-4 027 659).

Der Erfindung liegt die Aufgabe zugrunde, einen Schlauch der beschriebenen Art zu schaffen, der einerseits keine elektrischen Entladungen erzeugt und andererseits Anbackungen von Pulvermaterial vermeidet.

Zur Lösung dieser Aufgabe sind bei einem Schlauch gemäß der Erfindung die Merkmale von Patentanspruch 1 vorgesehen.

Besonders vorteilhaft ist es, wenn das Wandteil kreissektorförmig ausgebildet ist, vorzugsweise noch Art einer Schweißnaht etwa dreieckig, wobei die Spitze des Dreiecks etwa mit der Schlauchinnenseite und die Basis des Dreiecks etwa mit der Schlauchaußenseite zusammenfallen.

Mit dem erfindungsgemäßen Schlauch wird einerseits dank der relativ großen leitenden Oberfläche auf der Schlauchaußenseite eine gute Ableitung nach außen von unerwünschten, durch die Reibung der fließfähigen Stoffe erzeugten Ladungen erreicht. Andererseits wird aufgrund der an der Schlauchinnenseite minimierten Oberfläche des elektrisch leitfähigen Materials ein Anbacken und Sintern des fließfähigen Stoffes praktisch ausgeschlossen.

Um die Gefahr von Anbackungen oder Ansinterungen der geförderten Stoffe an der Schlauchinnenseite noch weiter zu verringern, kann das Wandteil in seiner Längsrichtung vorzugsweise keilförmig ausgebildet sein, kann also mit der Längsrichtung des Schlauches fortschreitend schmäler werden.

Das elektrisch leitfähige Wandteil besteht vorzugsweise aus Metalldraht oder metallener Litze. Alternativ kann das leitfähige Wandteil aus einem durch die Beimengung von Kohlenstoff leitfähig gemachten Kunststoff bestehen. Das elektrisch nicht leitfähige Material des Schlauches ist, wie an sich bekannt, ein elektrisch nicht leitender Kunststoff, vorzugsweise PVC oder PUR.

Ein Schlauch nach der Erfindung leitet elektrostatische Ladungen, die im Schlauch durch Reibung der geförderten Stoffe an der Schlauchinnenwand erzeugt werden, zuverlässig zur Erde ab, ohne daß es zu den die Förderung behindernden Anbackungen oder Ansinterungen des Materials an der Schlauchinnenwand kommen kann.

Die Erfindung ist im folgenden anhand von Zeichnungen mit weiteren Einzelheiten näher erläutert. Es zeigen:
- Fig. 1: eine Querschnittsdarstellung eines Schlauches gemäß der Erfindung;
- Fig. 2 und 3: perspektivische Teildarstellungen zweier unterschiedlicher Ausführungen von Schläuchen nach der Erfindung.

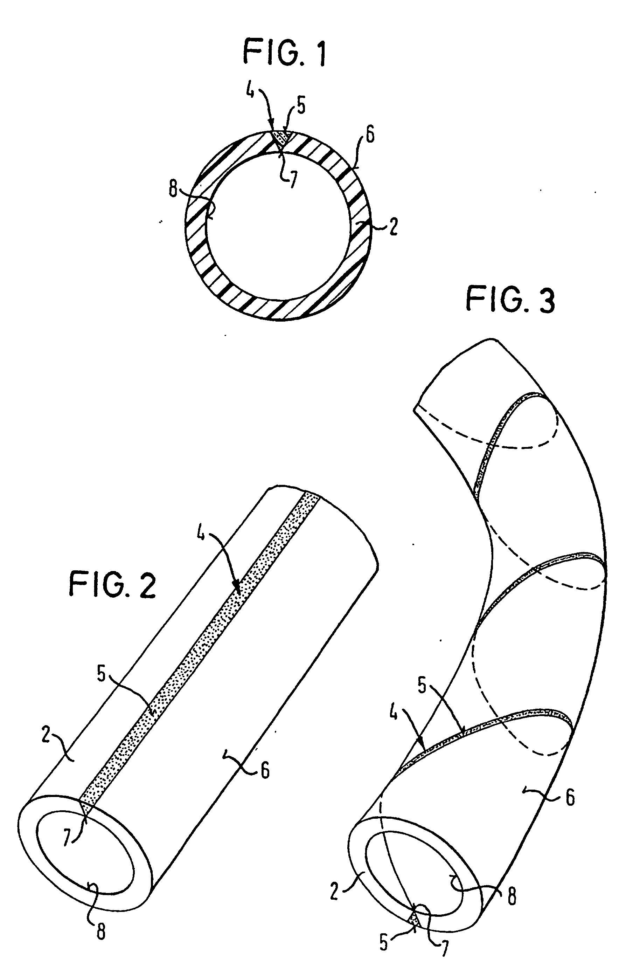

In der Schnittdarstellung nach Fig. 1 ist der Schlauchquerschnitt 2 eines Schlauches aus nicht leitendem Kunststoff, zum Beispiel PVC, an einer Umfangsstelle von einem Wandteil 4 aus elektrisch leitendem Material, wie einem mit Kohlenstoff versetzten Kunststoff, über die ganze Wandstärke des Schlauches von radial außen nach radial innen durchsetzt. Das Wandteil nimmt nur einen Bruchteil des Umfangs des Schlauchquerschnittes ein. Wie gezeigt ist das Wandteil 4 vorzugsweise etwa kreissektorförmig nach Art einer Schweißnaht ausgebildet, so daß an der Schlauchaußenseite 6 eine große Fläche zum Ableiten von unerwünschten Ladungen nach außen und an der Schlauchinnenwand 8 eine kleine Fläche zum Vermindern von Pulveranbackungen vorhanden sind.

Genauer gesagt hat das Wandteil 4 etwa den Querschnitt eines gleichschenkligen Dreiecks, dessen Basis bei 5 etwa auf die Schlauchaußenseite 6 zu liegen kommt, während die Spitze 7 des Dreiecks mit der Schlauchinnenseite 8 zusammenfällt. Somit ist die außen liegende Fläche 5 des Wandteils 4 maximiert, um eine große Ableitfläche für die elektrische Ladung zu erzielen, und die innen liegende Fläche 7 ist nahezu auf einen Punkt bzw. eine Linie reduziert und somit minimiert, um eine kleinstmögliche Pulveranbackfläche zu erreichen.

Zum Erreichen dieser Zwecke kann das Wandteil auch einen anderen Querschnitt, z.B. T-förmigen Querschnitt haben, wobei der T-Querbalken mit der Schlauchaußenseite 5 und das untere Ende des T-Standbalkens mit der Schlauchinnenseite zusammenfällt.

Das Wandteil 4 erstreckt sich bevorzugt über die ganze Schlauchlänge, und zwar gemäß Fig. 2 in Richtung einer Schlauchmantellinie, das heißt parallel zur Schlauchachse, und gemäß der Alternative nach Fig. 3 längs einer Schraubenlinie mit großer Steigung. In beiden Fällen ist das Wandteil der Einfachheit halber wie in Fig. 1 mit der Bezugszahl 4 bezeichnet.

In Fig. 2 ist noch die Besonderheit dargestellt, daß das elektrisch leitende Wandteil 4 in Richtung seiner Längsstreckung keilförmig ausgebildet ist, das heißt in Längsrichtung immer schmäler wird. Dieses Merkmal, das selbstverständlich auch bei der Ausführung nach Fig. 3 vorgesehen sein kann, vermindert die Gefahr des Anbackens oder Ansinterns von Pulver an der Schlauchinnenseite noch weiter.

Das Wandteil kann anstatt aus elektrisch leitfähigem Kunststoff auch aus einem Metalldraht oder einem Bündel mehrerer, nach Art eines Seiles verdrehter Metallitzen bestehen.

## Patentansprüche

1. Schlauch zum Fördern von fließfähigen Stoffen, insbesondere Beschichtungspulver, mit einer Schlauchwand aus elektrisch nicht oder schlecht leitendem Material, wobei in die Schlauchwand (2) ein elektrisch leitfähiges, außen geerdetes Wandteil (4) eingebaut ist, das sich radial über den Wandquerschnitt erstreckt und einen Querschnitt mit an der Schlauchaußenseite (2) erheblich größerer Umfangsabmessung (bei 5) als an der Schlauchinnenseite (8) hat, so daß an der Schlauchaußenseite (2) eine große Fläche zum Ableiten von unerwünschten Ladungen nach außen und an der Schlauchinnenseite (8) eine kleine Fläche zum Verhindern von Pulveranbackungen vorhanden sind.

2. Schlauch nach Anspruch 1, **dadurch gekennzeichnet, daß** der Querschnitt des Wandteils (4) etwa kreissektorförmig ausgebildet ist.

3. Schlauch nach Anspruch 2, **dadurch gekennzeichnet, daß** das Wandteil (4) im Querschnitt nach Art einer Schweißnaht etwa dreieckig ausgebildet ist, wobei die Spitze des Dreiecks mit der Schlauchinnenseite und eine Seite des Dreiecks mit der Schlauchaußenseite zusammenfallen.

4. Schlauch nach einem der Ansprüche 1 bis 3, **dadurch gekennzeichnet, daß** sich das Wandteil (4) über die Länge des Schlauches erstreckt.

5. Schlauch nach einem der Ansprüche 1 bis 4, **dadurch gekennzeichnet, daß** sich das Wandteil (4) parallel zur Längsachse des Schlauches erstreckt.

6. Schlauch nach einem der Ansprüche 1 bis 4; **dadurch gekennzeichnet, daß** sich das Wandteil (4) schraubenlinienförmig um die Längsachse des Schlauches erstreckt.

7. Schlauch nach einem der Ansprüche 1 bis 6, **dadurch gekennzeichnet, daß** das Wandteil (4) in Richtung seiner Längserstreckung keilförmig ausgebildet ist.

8. Schlauch nach einem der Ansprüche 1 bis 7, **dadurch gekennzeichnet, daß** der Schlauch mit Ausnahme des Wandteils (4) aus einem elektrisch nicht leitenden Kunststoff besteht, vorzugsweise aus PVC oder PUR.

9. Schlauch nach einem der Ansprüche 1 bis 8, **dadurch gekennzeichnet, daß** das Wandteil (4) aus Metalldraht oder metallener Litze besteht.

10. Schlauch nach einem der Ansprüche 1 bis 8, **dadurch gekennzeichnet, daß** das Wandteil (4) aus einem durch Beimengung von Kohlenstoff elektrisch leitfähig gemachten Kunststoff besteht.

## Claims

1. A hose for conveying free-flowing materials, in particular coating powder, comprising a hose wall of an electrically non-conductive or poor conductive material, wherein an electrically conductive wall member (4) grounded on the outside is integrated into the hose wall (2), said wall member extending radially across the cross section of the hose wall and having a cross section with circumferential dimensions (at 5) that are significantly larger at the outer surface of the hose (5) than on the inner surface of the hose (8), so that at the outer surface of the hose (2) a large area for conducting undesired charges to the outside and at the inner surface of the hose (8) a smaller area for preventing powder sintering are provided.

2. A hose as claimed in claim 1 wherein the cross section of the wall member (4) is shaped substantially as a sector of a circle.

3. A hose as claimed in claim 2 wherein the cross section of the wall member (4) is shaped substantially as a triangle, such as a welding seam, the apex of the triangle being located at the inner surface of the hose, and one side of the triangle coinciding with the outer surface of the hose.

4. A hose as claimed in one of claims 1 to 3, **characterized in that** the wall member (4) extends over the length of the hose.

5. A hose as claimed in one of claims 1 to 4 wherein the wall member (4) extends in parallel to the longitudinal axis of the hose.

6. A hose as claimed in one of claims 1 to 4 wherein the wall member (4) extends helically around the longitudinal axis of the hose.

7. A hose as claimed in one of claims 1 to 6 wherein the wall member (4) is shaped wedge-like in the direction of its longitudinal extension.

8. A hose as claimed in one of claims 1 to 7 wherein the hose, except for the wall member (4), is made of an electrically non-conductive plastic material, preferably polyvinylchloride or polyurethane.

9. A hose as claimed in one of claims 1 to 8 wherein the wall member (4) is made of metal wire or a metal strand.

10. A hose as claimed in one of claims 1 to 8 wherein the wall member (4) is made of a plastic material that is made conductive by addition of carbon.

## Revendications

1. Tuyau pour transporter des matières fluides, en particulier des poudres pour revêtement, comportant une paroi constituée d'une matière électriquement non conductrice ou mauvaise conductrice, dans lequel est intégrée, dans la paroi (2) du tuyau, une partie de paroi (4) électriquement conductrice, mise à la terre à l'extérieur, qui s'étend radialement sur la section de la paroi et qui présente une section transversale dont la dimension sur la circonférence (en 5) est considérablement plus grande sur le côté extérieur (2) du tuyau que sur son côté intérieur (8), de sorte que l'on a sur le côté extérieur (2) du tuyau une grande surface pour dévier vers l'extérieur des charges indésirables et, sur le côté intérieur (8) du tuyau, une petite surface pour empêcher des dépôts de poudre.

2. Tuyau selon la revendication 1, **caractérisé en ce que** la section de la partie de paroi (4) a approximativement la forme du secteur de cercle.

3. Tuyau selon la revendication 2, **caractérisé en ce que** la section de la partie de paroi (4) est conformée à la manière d'un cordon de soudure à peu près triangulaire, le sommet du triangle coïncidant avec le côté intérieur du tuyau et un côté du triangle coïncidant avec le côté extérieur du tuyau.

4. Tuyau selon l'une des revendications 1 à 3, **caractérisé en ce que** la partie de paroi (4) s'étend sur la longueur du tuyau.

5. Tuyau selon l'une des revendications 1 à 4, **caractérisé en ce que** la partie de paroi (4) s'étend parallèlement à l'axe longitudinal du tuyau.

6. Tuyau selon l'une des revendications 1 à 4, **caractérisé en ce que** la partie de paroi (4) s'étend en hélice autour de l'axe longitudinal du tuyau.

7. Tuyau selon l'une des revendications 1 à 6, **caractérisé en ce que** la partie de paroi (4) est de forme conique en direction de son étendue longitudinale.

8. Tuyau selon l'une des revendications 1 à 7, **caractérisé en ce qu'**à l'exception de la partie de paroi (4), le tuyau est constitué d'une matière plastique électriquement non conductrice, de préférence en PVC ou en polyuréthanne.

9. Tuyau selon l'une des revendications 1 à 8, **caractérisé en ce que** la partie de paroi (4) est constituée d'un fil métallique ou de fils torsadés en métal.

10. Tuyau selon l'une des revendications 1 à 8, **caractérisé en ce que** la partie de paroi (4) est constituée d'une matière plastique rendue électriquement conductrice par ajout de carbone.
